# EUROPEAN PATENT SPECIFICATION

(11) **EP 2 901 042 B1**
(45) Date of publication and mention of the grant of the patent: **02.11.2016**
(21) Application number: 13789372.3
(22) Date of filing: 30.09.2013
(51) Int. Cl.: F16H 1/48, F03D 15/00, F16D 3/18

(54) **POWER GEARING SYSTEM FOR A WIND TURBINE**
LEISTUNGSGETRIEBESYSTEM FÜR EINE WINDTURBINE
SYSTÈME D'ENGRENAGE DE PUISSANCE POUR UNE ÉOLIENNE

(30) Priority: 28.09.2012 GB 201217443
(43) Date of publication of application: 05.08.2015
(73) Proprietor: Romax Technology Limited, Nottingham NG7 2TU (GB)
(72) Inventor: GIBBS, Paul, Bristol BS4 3DD (GB); SCOTT, David, Nottingham Nottinghamshire NG16 2QQ (GB); SHIELD, David, Derby Derbyshire DE73 6UR (GB); JOHNSTONE, Gary, Nottingham Nottinghamshire NG7 2TU (GB); POON, Siu Yun, Nottingham Nottinghamshire NG7 1EY (GB)
(86) International application number: PCT/GB2013/052543
(87) International publication number: WO 2014/049377

(56) References cited:
- EP-A1- 0 811 764
- EP-A2- 1 867 871
- WO-A1-2012/052022
- DE-A1- 10 334 448
- DE-A1-102006 004 096
- GB-A- 2 496 256
- US-A1- 2011 142 617

## Description

### Technical Field

The present invention relates to power transmission systems. More specifically, the present invention relates to power transmission systems for wind turbines.

### Background Art

WO2012/052022 discloses the preamble of claim 1.

Wind turbines typically include a rotor with large blades driven by the wind. The blades convert the kinetic energy of the wind into rotational mechanical energy. The mechanical energy usually drives one or more generators to produce electrical power. Thus, wind turbines include a power transmission system to process and convert the rotational mechanical energy into electrical energy. The power transmission system is sometimes referred to as the "power train" of the wind turbine. The portion of a power transmission system from the wind turbine rotor to the generator is referred to as the drive train. Increasing the rotational speed of the wind turbine rotor to the speed required by the generator(s) is accomplished by a gearbox between the wind turbine rotor and generator. Thus, the gearbox forms part of the power transmission system and functions to convert a low-speed, high-torque input from the wind turbine rotor into a lower-torque, higher-speed output for the generator.

The wind turbine power transmission system transfers to a nacelle structure and tower supporting the system a variety of other rotor loads, which are due to variable wind conditions, dynamic interactions, control aspects, gravity, and other factors.

Mod-1 Wind Turbine Generator Analysis and Design Report, DOE/NASA/0058-79/2 - Vol. I, published May 1, 1979 discloses an approach seeks to handle the path of these loads through the power transmission system. In particular this report relates to a wind turbine generator which is a power transmission system for increasing the rotational speed from a rotor of a wind turbine. It has a floating shaft assembly configured to be driven by the rotor about a main axis and which connects the rotor to the gearbox. A bedplate serves as a support structure for a main bearing supporting the main shaft for rotation about the main axis and through which torque is transferred. The bedplate supports all equipment in the nacelle including rotor assembly and gearbox, and provides a stiff foundation for all equipment mounted in the nacelle. The system includes a three-stage parallel shaft gearbox having a housing rigidly coupled to the bedplate which supports the gearbox stub shaft for rotation about the main axis while constraining other movements of the input member. The gearbox stub shaft is coupled to main shaft via flexible couplings mounted on each end of the main shaft. The flexible coupling has a terminal portion associated with the main shaft; a terminal portion associated with the gearbox stub shaft; and a coupling element coupled to each of the terminal portions so as to accommodate angular and lateral misalignments as well as axial float. The flexible coupling comprises geared couplings having a curved spline tooth coupling. The flexible coupling includes terminal portions having radially-projecting teeth, and a coupling element having radially-projecting teeth engaging the radially-projecting teeth of the terminal portions to define two gear meshes. One set of radially-projecting teeth in each gear mesh have substantially straight profiles and the other set have profiles crowned in an axial direction.

Mod-0A 200 kW Wind Turbine Generator Design and Analysis Report, DOE/NASA/0163-2, published Aug 1, 1980, discloses a further approach to handle the path of loads through the power transmission system. In particular this report relates to a wind turbine generator which is a power transmission system for increasing the rotational speed from a rotor of a wind turbine. Rotor blades are attached to a hub on the low speed shaft. The low speed shaft is supported by two large bearings whose housings are supported by a bedplate; the bearings react vertical, side and axial loads. The speed increaser, or gearbox, which is a 3-stage parallel shaft gearbox, has a housing supported by the bedplate. The housing supports the input shaft, and torque is transferred to the input shaft, even though there may be lateral or angular misalignment. the main shaft is coupled to the gearbox input member by a flexible coupling that connects the upwind end of the low speed shaft to the input shaft of the gearbox. The flexible coupling includes a hub associated with the main shaft; a hub associated with the input member; and a coupling element coupled to each of the terminal portions. Each hub has teeth able to accommodate misalignment. The hubs have radially-projecting teeth, and the coupling element has radially-projecting teeth engaging the radially-projecting teeth of the hubs, defining two gear meshes. Each hub has external gear teeth that are crowned to accommodate misalignment. Two bolted-together flange elements surround the hubs.

Flex couplings of the kind shown in the above two documents are well known, for example Gearflex GFV coupling shown in the catalogue dated October 2005 of Renold Power Transmission Ltd has one set of inwardly projecting teeth and one set of outwardly projecting teeth which engage with respective terminal portions.

WO2012/052022 discloses similar arrangements of features.

In a planetary gear system, the function of a carrier is to transmit torque loads from the input shaft to the planet gears. Particularly in wind turbine applications, the carrier is also transmitting the weight of the gearbox back to the wind turbine rotor shaft.

These loads can cause deformation of the carrier, resulting in one or more of the following:
- Misalignment of the gear stage;
- Additional loads applied to the gearbox, due to overcoming the active range of the gearbox mountings; and
- Excessive vibration.

Approaches to increasing the stiffness of the carrier to avoid these problems have included:
- Thickening the carrier walls;
- Changing the material to something stiffer; or
- Adding ribs

However, these approaches introduce further problems.

For example, thicker walls add weight.

Utilising a stiffer material increases raw material cost, and may require more complex casting procedures (e.g. change from SG iron to cast steel).

Use of ribs can cause local stress raisers, which can cause fatigue failures. This is more of a problem in brittle materials, such as castings. Ribs also make for a more complex casting.

### Disclosure of Invention

A power transmission system for increasing the rotational speed from a rotor of a wind turbine is disclosed. The power transmission system comprises a main shaft configured to be driven by the rotor about a main axis, a support structure, a gearbox and a coupling member. The support structure includes at least one bearing supporting the main shaft for rotation about the main axis. The gearbox includes a gearbox housing rigidly coupled to the support structure and a planet carrier coupled to the main shaft. The coupling element connects the planet carrier to the main shaft. The main shaft is associated with a set of teeth projecting radially outward and the planet carrier is associated with a set of teeth projecting radially inward. The coupling member comprises a radially inward projecting set of teeth engaging with the set of teeth associated with the main shaft, and the coupling member further comprising a radially outward projecting set of teeth engaging with the set of teeth associated with the planet carrier.

Thus the flexibility between the main shaft and planet carrier may be provided by a flexible coupling defined by a terminal portion associated with the main shaft, a terminal portion associated with the input member, and a coupling element. The coupling element is coupled to each of the terminal portions so as to define two joints. Each joint permits relative rotation between the coupling element and respective terminal portion around axes perpendicular to the main axis and relative translation along the main axis. As a result of such a double-joint, the flexible coupling accommodates radial, axial, and angular misalignments between the main shaft and gearbox input member.

Additional advantages may be provided by the internal distribution of forces when the gearbox housing is suspended from the support structure, which sits on top of tower when installed in a wind turbine. The support structure in such an embodiment may comprise a bearing housing surrounding the bearing(s) that support the main shaft. The gearbox housing may then be suspended directly or indirectly from the bearing housing. Thus, there is no load path through the gearbox housing to the tower. This advantage is maintained when the power transmission further includes a generator integrated with the gearbox. In particular, the generator includes a rotor and stator positioned within a generator housing, which is rigidly coupled to and suspended from gearbox housing.

The present invention has features designed to increase the stiffness of the carrier. The invention places material at the outermost edge of the available space.

The present invention also provides a member for a planet carrier, the member adapted to extend axially away from the planet carrier, wherein the member is frustoconical. The member stiffens the structure of the planet carrier and torsion load is transmitted without twisting the planet carrier.

Preferably, the member is connected to the carrier legs to form an assembly comprising the member and the legs. Carrier plate may be connected to the assembly. Planet pins may be connected to the assembly via the carrier plates. Torsion load is transmitted to the planet pins without twisting the carrier plate.

Preferably, the member is connected to the carrier plate to form an assembly comprising the member and the carrier plate. The assembly comprising the member and the carrier plate may be connected to the carrier legs and twisting of the legs relative to the carrier plate is resisted. The legs may comprise steel columns located between two carrier plates.

Preferably, the member is located around a periphery of the planet carrier.

Preferably, the member is located radially inwardly of a periphery of the planet carrier.

Preferably, the gearbox comprises a non-rotating support component having a bearing arrangement located in a single locus along the longitudinal axis. The bearing arrangement is arranged to provide support between the planet carrier region and the non-rotating support component, the gearbox having no further bearings on the planet carrier between the locus and the frusto-conical member.

Preferably, the single locus is at the radially and axially extended part of the planet carrier region.

Preferably, the bearing arrangement is arranged to at least partially restrict non-rotational movement between the member and the non-rotating support component. Preferably, the non-rotational movement is one or more of relative radial movement, relative axial movement, and relative tilt movement between the input shaft and the non-rotating component.

Preferably, the bearing arrangement comprises a double tapered roller bearing.

### Brief Description of Drawings

The present invention will now be described, by way of example only, with references to the accompanying drawings, in which:
Fig. 1 is a perspective view of one example of a wind turbine;
Fig. 2 is a cross-sectional view of a power transmission system for the wind turbine of Fig. 1;
Figs. 3A and 3B are cross-sectional views showing a coupling in the power transmission system of Fig. 2 in further detail;
Figs. 4 and 5 show sectional views of an embodiment of the planet carrier of the present invention, the former showing the location of planet pins and a planet gear; and
Fig. 6 is a diagrammatic view of an embodiment of the planet carrier of the present invention, in which the member extending from the planet carrier legs towards the input shaft is conical.

### Best Mode for Carrying Out the Invention

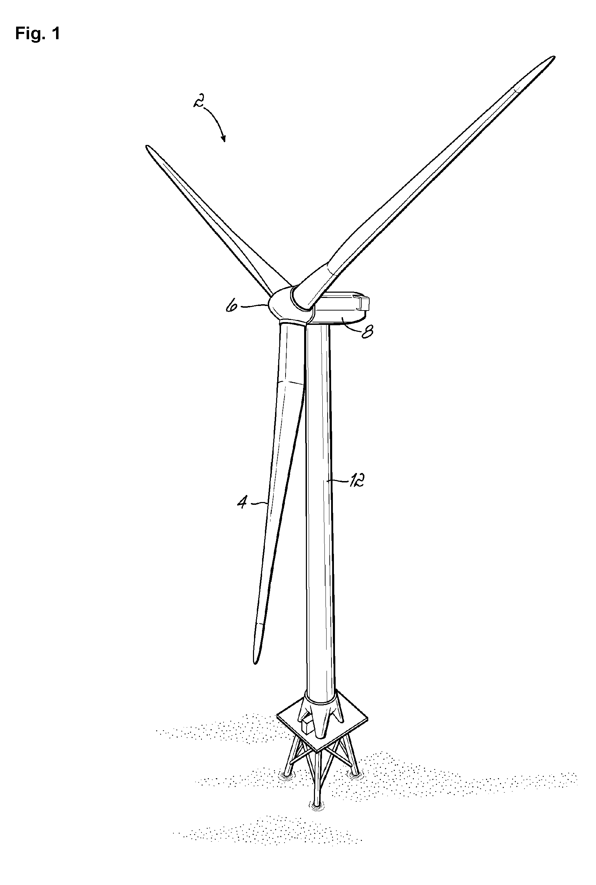

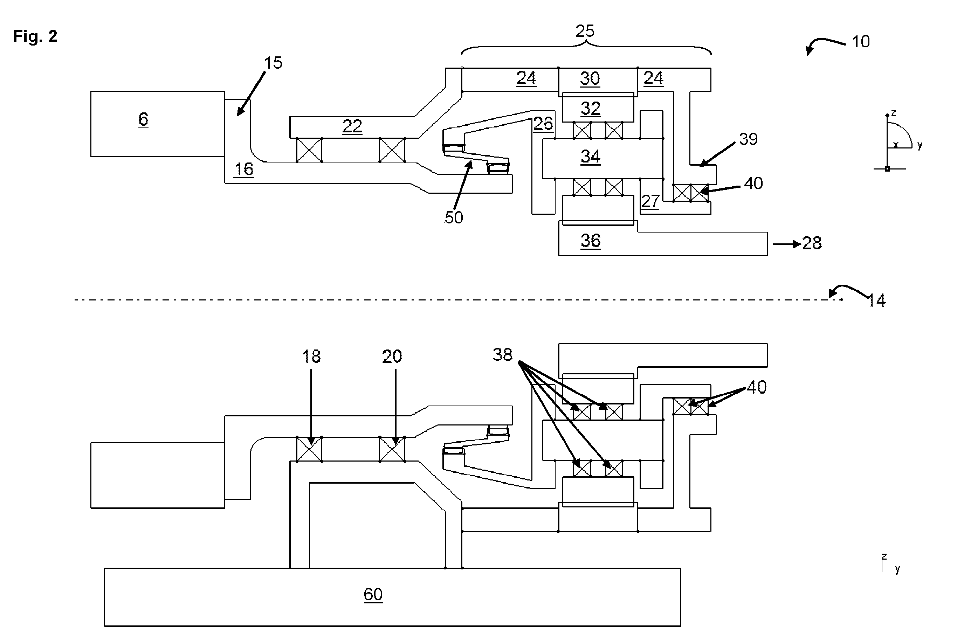

Fig. 1 shows one example of a wind turbine 2. Although an offshore wind turbine is shown, it should be noted that the description below may be applicable to other types of wind turbines. The wind turbine 2 includes rotor blades 4 mounted to a hub 6, which is supported by a nacelle 8 on a tower 12. Wind causes the rotor blades 4 and hub 6 to rotate about a main axis 14 (Fig. 2). This rotational energy is delivered to a power transmission system (or "power train") 10 housed within the nacelle 8.

As shown in Fig. 2, the power transmission system 10 includes a main shaft 16 coupled to the hub 6 (Fig.1). The power transmission system 10 also includes first and second bearings 18, 20 supporting the main shaft 16, a bearing housing 22 surrounding the first and second bearings 18, 20, and a gearbox 25 having a gearbox planet carrier 26 driven by the main shaft 16. The gearbox 25 increases the rotational speed of the main shaft 16 to drive a generator 28 (not shown). A support structure 60 supports bearing housing 22, and the gearbox 25 is suspended from the bearing housing.

Fig. 2 also shows a three-dimensional coordinate system based upon the main axis 14. In this coordinate system, the y-axis is considered to be the main axis of the system. The x-axis and z-axis are perpendicular to the y-axis, with the z-axis being generally aligned with the gravitational direction. Translational and rotational directions are defined with reference to the coordinate system.

The main shaft 16 is hollow and includes a flange portion 15 at the end connecting to the hub 6 (Fig. 1). The flange portion 15 enables the main shaft 16 to be coupled to the hub with bolts. In other embodiments, the main shaft 16 may be coupled to the hub by some other arrangement that ensures the transfer of torque. Furthermore, although the flange portion 15 is shown as being formed integrally with the rest of the main shaft 16, it may alternatively be a separate component bolted or otherwise secured to the main shaft 16.

The first and second bearings 18, 20 support the main shaft 16 for rotation about the y-axis 14 but prevent other relative motions between the bearing housing 22 and main shaft 16. In the configuration shown in Fig. 2, the bearing housing 22 is in the form of a bearing support tube.

The gearbox 25 is suspended from the bearing housing 22 and main shaft 16; there is no support for the gearbox 25 itself. More specifically, the gearbox 25 includes the planet carrier 26, which is coupled to the main shaft 16, and a gearbox housing 24, which is suspended from the bearing housing 22. The gearbox housing 24 is only supported at one end.

The planet carrier 26 is flexibly coupled to the main shaft 16 via a flexible connection or coupling 50 such that the main shaft 16 and planet carrier 26 are not rigidly connected. The coupling 50 provides translational degrees of freedom in all directions and rotational degrees of freedom only about the x-axis and z-axis. There is no rotational degree of freedom about the y-axis (main axis) because the coupling 50 is torsionally stiff.

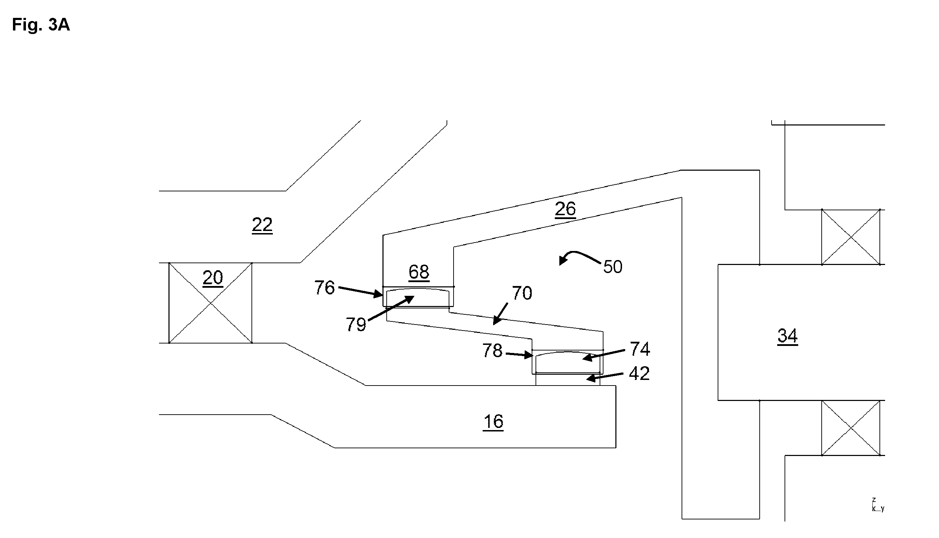

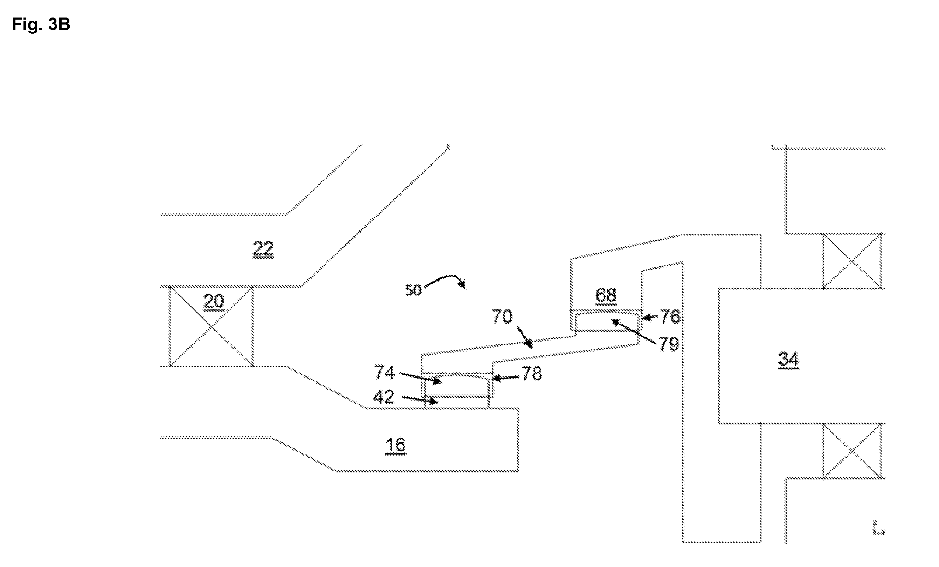

Figs. 3A and 3B shows coupling 50 in further detail. The coupling 50 is a curved spline tooth coupling defined by the coupling flange 42 of the main shaft 16, a coupling flange 68 of the planet carrier 26, and a coupling element 70 circumferentially engaging the coupling flanges 42, 68. The coupling flanges 42, 68 are shown as being integrated with the main shaft 16 and planet carrier 26, respectively, but either or both of these may be separate components bolted or other wise attached to the main shaft 16 and planet carrier 26.

Coupling flange 42 terminates in radially-outward projecting teeth 74, and coupling flange 68 terminates in radially-inward projecting teeth 76. The coupling element 70 includes at one end radially-inward projecting teeth 78 and at an opposite end radially outward projecting teeth 79 to repectively engage the teeth 74, 76. Therefore, two gear meshes are defined having a 1:1 gear ratio. One set of teeth in each gear mesh have substantially straight profiles, while the other set have profiles crowned in an axial direction, as shown. Thus the radially-outward projecting teeth 74, 79 are the ones with a crowned profile. The radially-inward projecting teeth 76, 78 have straight profiles and extend along their length to mesh with the teeth 74, 79. As a result of this arrangement, the coupling 70 functions a double-joint that can accommodate different types of misalignments. More specifically, the coupling 50 can be broken down into three kinematic bodies: the main shaft 16 (including the coupling flange 42), the coupling element 70, and the planet carrier 26 (including the coupling flange 68). A joint is defined between each coupling flange 42, 68 and the coupling element 70. In this particular embodiment, the joints are gear meshes. Each joint permits relative rotation around the x-axis and z-axis because the crowned teeth 74, 76. Relative translation in an axial direction (i.e., along the main axis 14) is also permitted because the straight teeth 78 do not constrain the crowned teeth 74, 46 in this direction. The joints are not designed for other relative movements. This kinematic relationship is what provides the coupling 50 with translational degrees of freedom in all directions and rotational degrees of freedom about the x-axis and z-axis.

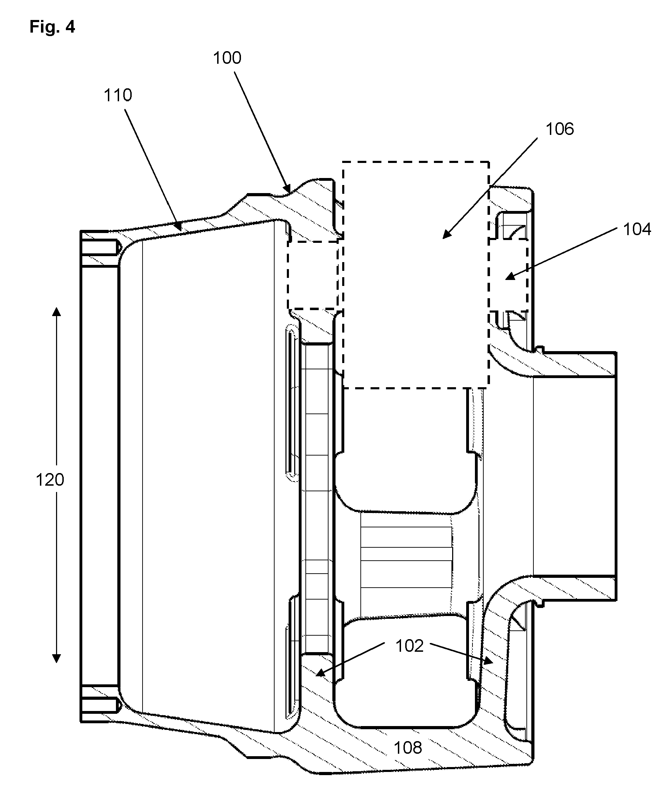

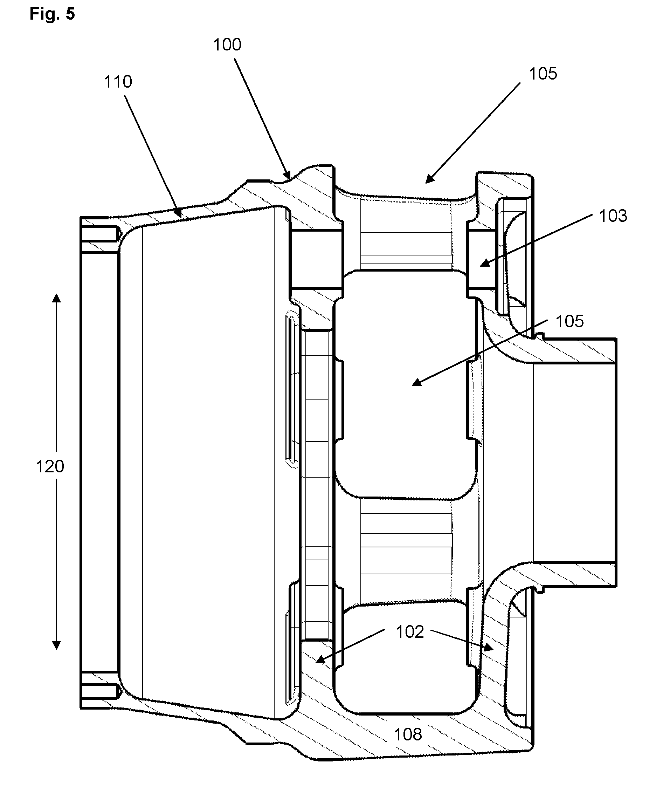

Referring now to Figs. 4-6, an embodiment of the present invention shows the planet carrier comprising a frusto-conical member 110 and extending from the planet carrier legs 108 towards the input shaft 120.

This structurally significant extension to legs 108 in the form of frustoconical member 110 extending axially away from the carrier strongly connects legs 108 together. This stiffens the structure of planet carrier 100 and reduces twisting of legs 110 on each side relative to carrier plate 102.

Planet pins 104 are connected to the extended leg structure 108/110 via carrier plates 102. Member 110 is part of the structure that makes up the legs 108 which means that functionally legs 108 are not discrete components as they are now strongly interconnected.

A thickness of member 110 in the radial direction only needs to be big enough to prevent buckling, which means the member is a lightweight structure. Carrier plates 102 can be thin, as they are not required to resist the bending generated in a prior art planet carrier 100.

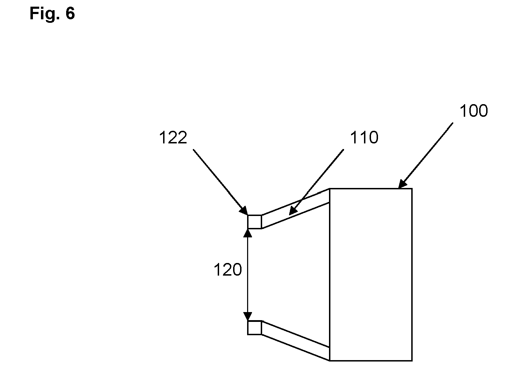

Although maximum resistance to shear loads and bending (both in the vertical plane and in torsion) comes from a 0 degree cone, which is a cylinder, it is the depth of material in the plane of the loading that determines the operational stiffness in this design. Referring to Figure 6, which shows a frustoconical member 110, the end nearest output shaft 120 has a smaller diameter, which means that flat plate 122 is of smaller diameter, or may not be required. Thus although the cylinder itself would be stiffer, the frustoconical arrangement is a better idea because flat plate 122 is smaller or not needed.

Referring again to Fig. 2, planet carrier 26 has a portion 27 extending radially inwards and axially downwind from the planet gears. A bearing arrangement 40 for portion 27 of the planet carrier is positioned on the downwind side of the first stage planet carrier 26 at a single locus as show. Housing 24 supports the non-rotating support component 39 and the bearing arrangement 40.

### Industrial Applicability

This reduces the diameter, weight and cost of the bearing arrangement. The diameter, for example, can be less than the outer diameter of the input shaft. Bearings positioned on the upwind side of the first stage planet carrier 26 are not required. Bearing arrangement 40 can be, for example, a pair of bearings such as the tapered roller bearings as shown. Thus, the weight of the gearbox 25 lies between the two theoretical support points of the pair of back to back tapered roller bearings 40 at the down wind side of the first stage planet carrier 26. The support for the gearbox is more stable compared to the traditional arrangement with face to face bearings in which the weight of the gearbox lies on the extended line of the two theoretical support points. The absence of upwind bearings for the first stage planet carrier 26 effectively creates space for the coupling arrangement 50.

## Claims

1. A power transmission system (10) for increasing the rotational speed from a rotor (6) of a wind turbine (2), comprising:
a main shaft (16) configured to be driven by the rotor (6) about a main axis (14);
a support structure (60) including at least one bearing (18,20) supporting the main shaft (16) for rotation about the main axis (14);
a gearbox (25) having a gearbox housing (24) rigidly coupled to the support structure (60) and a planet carrier (26) coupled to the main shaft (16), and
a coupling member (50) connecting the planet carrier to the main shaft (16);
in which the main shaft (16) is associated with a set of teeth projecting radially outward (74), the planet carrier (26) is associated with a set of teeth projecting radially inward (76), the coupling member (50) comprises a radially inward projecting set of teeth (78) engaging with the set of teeth (74) associated with the main shaft (16), and the coupling member (50) further comprising a radially outward projecting set of teeth (79) engaging with the set of teeth (76) associated with the planet carrier (26);
**characterised in that:** the planet carrier (26) comprises a frusto-conical member (110) extending axially away from the planet carrier (26) in an upwind direction, wherein the frusto-conical member (110) stiffens the planet carrier (26) and torsion load is transmitted without twisting the planet carrier (26),
the set of teeth (76) associated with the planet carrier (26) are located on the frusto-conical member (110).

2. A power transmission system (10) according to claim 1, in which the gearbox housing (24) is suspended from the support structure (60).

3. A power transmission system (10) according to any preceding claim, in which the radially outward projecting set of teeth (79) on the coupling member (50) are located axially upwind from the radially inward projecting set of teeth (78) on the coupling member (50).

4. A power transmission system (10) according to any preceding claim, in which the set of teeth (74) on the main shaft are located radially inward of the set of teeth (76) on the planet carrier (26).

5. A power transmission system (10) according to any of the preceding claims, in which the set of teeth (74) associated with the main shaft comprises a member configured to form an interference fit with the main shaft.

6. A power transmission system (10) according to any of the preceding claims, in which radially outward projecting sets of teeth (74,79) have profiles crowned in an axial direction and radially inward projecting sets of teeth (76,78) have substantially straight profiles.

7. A power transmission system (10) according to claims 1 to 6, in which the gearbox (25) comprises a non-rotating support component (39), in which the non-rotating support component (39) comprises a bearing arrangement (40) located in a single locus along the longitudinal axis and arranged to provide support between the planet carrier region and the non-rotating support component (39), the gearbox (25) having no further bearings on the planet carrier (26) between the locus and the frusto-conical member (110).

8. A power transmission system (10) according to claim 7, in which the single locus is at the radially and axially extended part of the planet carrier region.

9. A power transmission system (10) according to claim 7 or claim 8, in which the bearing arrangement (40) is arranged to at least partially restrict non-rotational movement between the member (110) and the non-rotating support component (39).

10. A power transmission system (10) according to claim 9, wherein the non-rotational movement is one or more of relative radial movement, relative axial movement, and relative tilt movement between the input shaft and the non-rotating component.

11. A power transmission system (10) according to any of claims 7 to 10, in which the bearing arrangement (40) comprises a double tapered roller bearing.

## Patentansprüche

1. Leistungsübertragungssystem (10) zum Erhöhen der Rotationsgeschwindigkeit von einem Rotor (6) einer Windturbine (2), umfassend:
eine Hauptwelle (16), die dafür konfiguriert ist, von dem Rotor (6) um eine Hauptachse (14) angetrieben zu werden;
eine Stützkonstruktion (60), die wenigstens ein die Hauptwelle (16) zum Rotieren um die Hauptachse (14) stützendes Lager (18, 20) enthält;
ein Getriebe (25) mit einem Getriebegehäuse (24), das starr mit der Stützkonstruktion (60) und einem an die Hauptwelle (16) gekoppelten Planetenträger (26) gekoppelt ist, und
ein Kopplungsglied (50), das den Planetenträger an die Hauptwelle (16) koppelt;
wobei die Hauptwelle (16) einem Satz radial von nach außen abstehenden Zähnen (74) zugeordnet ist, wobei der Planetenträger (26) einem Satz von radial nach innen abstehenden Zähnen (76) zugeordnet ist,
wobei das Kopplungsglied (50) einen radial nach innen abstehenden Satz von Zähnen (78) umfasst, die mit dem Satz von der Hauptwelle (16) zugeordneten Zähnen (74) in Eingriff treten, und wobei das Kopplungsglied (50) weiter einen radial nach außen abstehenden Satz von Zähnen (79) umfasst, die mit dem dem Planetenträger (26) zugeordneten Satz von Zähnen in Eingriff treten;
**dadurch gekennzeichnet, dass:** der Planetenträger (26) ein kegelstumpfförmiges Glied (110) umfasst, das sich axial von dem Planetenträger (26) in eine windwärts gehende Richtung erstreckt, wobei das kegelstumpfförmige Glied (110) den Planetenträger (26) verstärkt und Torsionsbelastung übertragen wird, ohne den Planetenträger (26) zu drehen,
wobei der Satz von dem Planetenträger (26) zugeordneten Zähnen (76) in dem kegelstumpfförmigen Glied (110) angebracht ist.

2. Leistungsübertragungssystem (10) nach Anspruch 1, wobei das Getriebegehäuse (24) von der Stützstruktur (60) aufgehängt ist.

3. Leistungsübertragungssystem (10) nach einem der vorhergehenden Ansprüche, wobei der nach außen abstehende Satz von Zähnen (79) auf dem Kopplungsglied (50) axial windwärts von dem radial nach innen abstehenden Satz von Zähnen (78) auf dem Kopplungsglied (50) angebracht ist.

4. Leistungsübertragungssystem (10) nach einem der vorhergehenden Ansprüche, wobei der Satz von Zähnen (74) auf der Hauptwelle radial nach innen von dem Satz von Zähnen (76) auf dem Planetenträger (26) angebracht ist.

5. Leistungsübertragungssystem (10) nach einem der vorhergehenden Ansprüche, wobei der der Hauptwelle zugeordnete Satz von Zähnen (74) ein Glied umfasst, das dafür konfiguriert ist, eine Presspassung mit der Hauptwelle zu bilden.

6. Leistungsübertragungssystem (10) nach einem der vorhergehenden Ansprüche, wobei radial nach außen abstehende Sätze von Zähnen (74, 79) in eine axiale Richtung gewölbte Profile aufweisen und radial nach innen abstehende Sätze von Zähnen (76, 78) im Wesentlichen gerade Profile aufweisen.

7. Leistungsübertragungssystem (10) nach einem Ansprüche 1 bis 6, wobei das Getriebe (25) eine nicht-rotierende Stützkomponente (39) enthält, wobei die nicht-rotierende Stützkomponente (39) eine Lageranordnung (40) enthält, die an einer einzelnen Stelle entlang der Längsachse angebracht ist und so angeordnet ist, dass sie eine Stütze zwischen dem Planetenträgerbereich und der nicht-rotierenden Stützkomponente (39) bereitstellt, wobei das Getriebe (25) keine weiteren Lager auf dem Planetenträger (26) zwischen der Stelle und dem halbkegelförmigen Glied (110) aufweist.

8. Leistungsübertragungssystem (10) nach Anspruch 7, wobei sich der einzelne Ort an dem sich radial und axial erstreckenden Teil des Planetenträgerbereichs befindet.

9. Leistungsübertragungssystem (10) nach Anspruch 7 oder Anspruch 8, wobei die Lageranordnung (40) so angeordnet ist, dass sie die nicht-rotierende Bewegung zwischen dem Glied (110) und der nicht-rotierenden Stützkomponente (39) zumindest teilweise einschränkt.

10. Leistungsübertragungssystem (10) nach Anspruch 9, wobei die nicht-rotierende Bewegung eine oder mehrere von einer radialen Bewegung, einer relativen axialen Bewegung und einer relativen Kippbewegung zwischen der Antriebswelle und der nicht-rotierenden Komponente ist.

11. Leistungsübertragungssystem (10) nach einem der Ansprüche 7 bis 10, wobei die Lageranordnung (40) ein doppelt verjüngtes Rolllager umfasst.

## Revendications

1. Système de transmission de puissance (10) servant à augmenter la vitesse de rotation d'un rotor (6) d'une éolienne (2), comprenant:
un arbre principal (16) conçu pour être entraîné par le rotor (6) autour d'un axe principal (14);
une structure de support (60) comprenant au moins un palier (18, 20) soutenant l'arbre principal (16) pour sa rotation autour de l'axe principal (14);
un multiplicateur (25) possédant un logement de multiplicateur (24) couplé de manière rigide à la structure de support (60) et un porte-satellite (26) couplé à l'arbre principal (16), et
un élément de couplage (50) connectant le porte-satellite (26) à l'arbre principal (16);
dans lequel l'arbre principal (16) est associé à un ensemble de dents faisant saillie radialement vers l'extérieur (74), le porte-satellite (26) est associé à un ensemble de dents faisant saillie radialement vers l'intérieur (76),
l'élément de couplage (50) comprend un ensemble de dents faisant saillie radialement vers l'intérieur (78) se mettant en prise avec l'ensemble de dents (74) associé à l'arbre principal (16); et
l'élément de couplage (50) comprenant en outre un ensemble de dents faisant saillie radialement vers l'extérieur (79) se mettant en prise avec l'ensemble de dents (76) associé au porte-satellite (26);
**caractérisé en ce que** le porte-satellite (26) comprend un élément tronconique (110) s'étendant axialement en direction opposée du porte-satellite (26) dans une direction contre le vent, l'élément tronconique (110) raidissant le porte-satellite (26) et la charge de torsion étant transmise sans torsion du porte-satellite (26), l'ensemble de dents (76) associé au porte-satellite (26) est situé sur l'élément tronconique (110).

2. Système de transmission de puissance (10) selon la revendication 1, dans lequel le logement de multiplicateur (24) est suspendu à partir de la structure de support (60).

3. Système de transmission de puissance (10) selon l'une quelconque des revendications précédentes, dans lequel l'ensemble de dents faisant saillie radialement vers l'extérieur (79) sur l'élément de couplage (50) est situé axialement contre le vent à partir de l'ensemble de dents faisant saillie radialement vers l'intérieur (78) sur l'élément de couplage (50).

4. Système de transmission de puissance (10) selon l'une quelconque des revendications précédentes, dans lequel l'ensemble de dents (74) sur l'arbre principal est situé radialement vers l'intérieur de l'ensemble de dents (76) sur le porte-satellite (26).

5. Système de transmission de puissance (10) selon l'une quelconque des revendications précédentes, dans lequel l'ensemble de dents (74) associé à l'arbre principal comprend un élément conçu pour former un ajustement avec serrage avec l'arbre principal.

6. Système de transmission de puissance (10) selon l'une quelconque des revendications précédentes, dans lequel les ensembles de dents faisant saillie radialement vers l'extérieur (74, 79) possèdent des profils couronnés dans une direction axiale et les ensembles de dents faisant saillie radialement vers l'intérieur (76, 78) possèdent des profils sensiblement droits.

7. Système de transmission de puissance (10) selon l'une quelconque des revendications 1 à 6, dans lequel le multiplicateur (25) comprend un composant de support non rotatif (39), dans lequel le composant de support non rotatif (39) comprend un arrangement de palier (40) situé dans un lieu géométrique unique le long de l'axe longitudinal et agencé pour fournir un support entre la région de porte-satellite et le composant de support non rotatif (39), le multiplicateur (25) ne possédant aucun palier supplémentaire sur le porte-satellite (26) entre le lieu géométrique et l'élément tronconique (110).

8. Système de transmission de puissance (10) selon la revendication 7, dans lequel le lieu géométrique unique est sur la partie étendue radialement et axialement de la région du porte-satellite.

9. Système de transmission de puissance (10) selon la revendication 7 ou la revendication 8, dans lequel l'arrangement de palier (40) est agencé pour au moins partiellement restreindre le mouvement non rotatif entre l'élément (110) et le composant de support non rotatif (39).

10. Système de transmission de puissance (10) selon la revendication 9, dans lequel le mouvement non rotatif est un ou plusieurs parmi le mouvement radial relatif, le mouvement axial relatif et le mouvement d'inclinaison relatif entre l'arbre d'entrée et le composant non rotatif.

11. Système de transmission de puissance (10) selon l'une quelconque des revendications 7 à 10, dans lequel l'arrangement de palier (40) comprend un double palier à roulement conique.
